# Europäisches Patentamt

# European Patent Office

# Office européen des brevets

(11) Publication number: **0 055 392**
**B1**

# EUROPEAN PATENT SPECIFICATION

(45) Date of publication of patent specification: **18.03.87**

(51) Int. Cl.⁴: **G 06 F 9/26**

(21) Application number: **81109851.6**

(22) Date of filing: **24.11.81**

(54) **Microprogrammed control unit with multiple branch capability.**

(30) Priority: **18.12.80 IT 2674680**

(43) Date of publication of application:
**07.07.82 Bulletin 82/27**

(45) Publication of the grant of the patent:
**18.03.87 Bulletin 87/12**

(84) Designated Contracting States:
**DE FR GB NL SE**

(56) References cited:
**US-A-3 570 006**
**US-A-3 875 565**

(73) Proprietor: **HONEYWELL INFORMATION SYSTEMS ITALIA S.p.A.**
**Via Martiri d'Italia 10**
**I-10014 Caluso (Torino) (IT)**

(72) Inventor: **Casamatta, Angelo**
**Via Mantegna 4**
**I-20010 Cornaredo (MI) (IT)**

Courier Press, Leamington Spa, England.

## Description

This invention relatesto the microprogrammed control units used in data processing systems.

It is known that the modern data processing systems comprise a control unit which allows to interpret and execute, by means of suitable microprograms, the several program instructions forming the work program or programs assigned to the system.

In other words each instruction to be executed recalls a microprogram formed by several microinstructions, each microinstruction being executed during a machine cycle.

Modern data processing systems are described, for example, in U.S. Patents N. 3,812,464, N. 3,872,447, N. 3,956,738, N. 3,991,404, N. 3,949,372 and in several other patents.

The interpretation and the execution of each instruction generally require several machine cycles and the execution of several microinstructions, that is of a microprogram.

As it is known, the microinstructions are generally stored in a microprogram read only memory or ROS, from which they are read out one by one, at each machine cycle, and decoded in a set of microcommands which control, during each machine cycle, the elementary operations of the logical electrical network constituting the processor, the operations being specified by the same microcommands.

The expressive power of a microinstruction is limited by its parallelism, that is by the number of bits composing it: the higher parallelism is, the higher is the possibility to parallelly generate during the same machine cycle some independent microcommands.

Processor architecture and saving reasons generally lead to the use of a reduced microinstruction parallelism; such parallelism is generally lower than that one which would be required in order to develop at the same time all the microcommands that the processors can execute during one machine cycle.

Therefore a lot of operations, which could be executed at the same time, must be executed during subsequent machine cycles.

It is known, for instance, that the microinstructions are generally classified in operative microinstructions and jump microinstructions. In an operative microinstruction, the constituting bits express in coded form some operative microcommands which actually control operations of sum, subtraction, comparison, transfer from register to register etc. . . .

For such microinstructions the recall of the subsequent microinstruction sequentially occurs by incrementing by one unit the address of the previous microinstruction.

In fact, in the format of the operative microinstructions, bit fields do not remain available having sizes suitable to carry out the addressing in a different way, for instance by using a portion of the microinstruction in order to provide the address of the subsequent microinstruction in absolute or relative terms, both in direct or indirect mode, say by providing the address of a register within which the effective address of the subsequent microinstruction is stored. On the contrary, in a jump microinstruction, the constituting bits express in coded form some microcommands which command some operations of non-sequential addressing of the next microinstruction and provide in absolute or relative way, directly or indirectly, the address of the subsequent microinstruction.

Besides, in case of conditioned jump microinstruction, the non-sequential addressing of the next microinstruction is conditioned by the occurrence of a determined condition, directly or indirectly shown by a field of the same microinstruction.

In the format of such microinstructions, bit fields of sizes suitable to carry out together different operations (that is logical/arithmetical operations or transfer operations) do not remain available, neither so much the less to carry out conditioned jumps to several different and independent addresses owing to the occurrence of several different conditions.

In fact this last feature would require that the microinstruction has the capability of providing at the same time several addresses and several jump conditions.

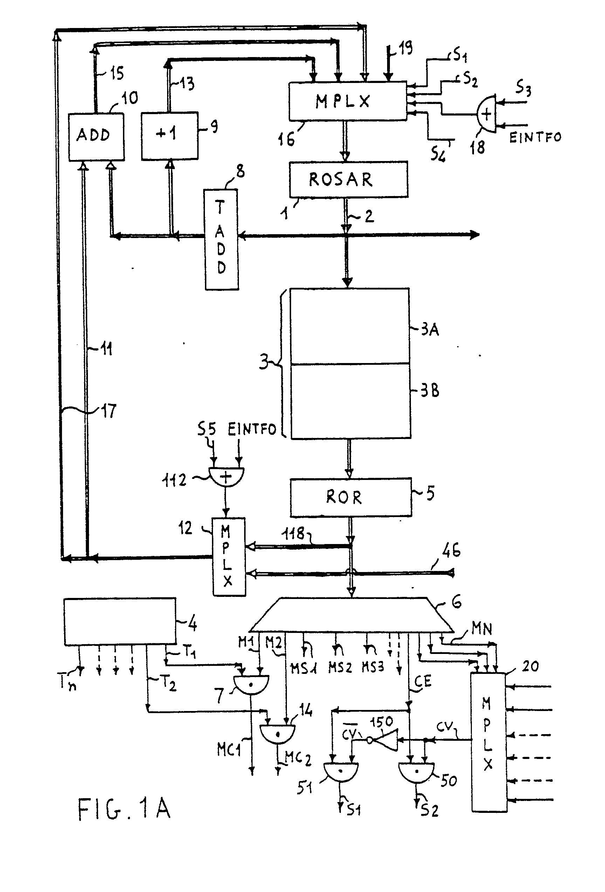

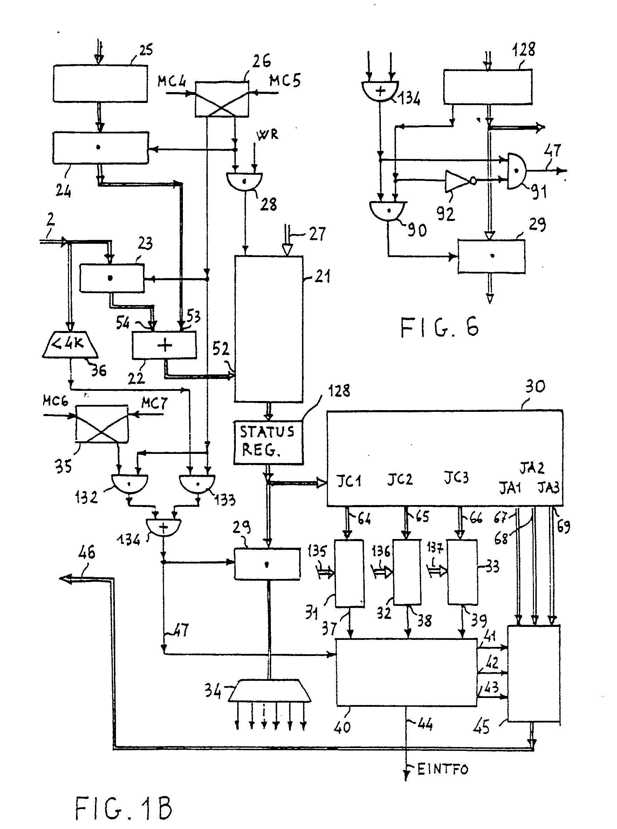

In order to overcome such limitation US—A—3,570,006 discloses an apparatus for effecting multiple branching operation in which branching addresses are stored in a set of registers (registers 60, 62, 64, 66, 68 of Fig. 1) rather than in a field of a branch microinstruction, and a field of the microinstructions select which among several conditions in the system have to be considered for providing, upon verified test, selection of one of the registers.

The known apparatus comprises a main control memory (48), an addressing register (50) connected to the addressing inputs of said main memory, a main memory output register (52) connected to the outputs of said main memory, a microcommand decoder (56) connected to the outputs of said main output register, an addressing network (50, 70, 74) for generating sequential addresses and absolute or relative, conditioned or unconditioned, jump addresses, said addressing network being controlled by microcommands received from outputs of said decoder (c.f. Figure 1).

The condition field of the microinstruction stored in the memory output register (52) is fed as a selection input to a condition selection network or test logic (78) where it enables the recognition of some among a plurality of conditions received from the system.

The testing of more than one condition in a plurality entails the need for a priority selection network (74) connected to the output of the condition selection network for establishing which of the conditions, among the ones tested and verified has to reference a jump address.

Accordingly a jump address selection network (72) is further provided, connected to the output of the priority selection network and to the jump address registers (60, 62, 64, 66, 68) for selecting one of the registers for transfer of the jump address to the memory addressing register.

The disclosed embodiment still suffers of the disadvantage that the use of a microinstruction field for the purpose of defining which are the conditions to be tested, limit the availability of the microinstruction bits for other purposes.

Such limitations are overcome by the microprogrammed control unit with multiple branch capability object of the present invention as claimed in claim 1.

According to the invention, a first auxiliary read/write memory having reduced capacity and low parallelism and a second auxiliary read/write memory having reduced capacity and high parallelism are associated to the microprogram memory.

The first auxiliary memory is devoted to store addressing codes of the second auxiliary memory.

The second auxiliary memory is devoted to store several codes for identification of conditions, several branch addresses and, possibly, other information.

When the microcommand memory is addressed, the first auxiliary memory is addressed too, which, in its turn, addresses the second auxiliary memory.

In such way, at each machine cycle, besides a microinstruction read out from the microprogram memory, also a set of information read out from the second auxiliary memory and representative of branch conditions, branch addresses or much more is available.

A microinstruction may be therefore completed by other information and it is as if the microinstruction length is increased.

In such way, by one microinstruction so completed, logical/arithmetical operations or transfers can be executed jointly with the examination of several conditions and the jump to one of several addresses.

These and other features and advantages will result more clearly from the following description of a preferred embodiment of the invention and from the enclosed drawings where:

— Figures 1A and 1B jointly show a preferred embodiment of the microprogrammed control unit according to the invention;

— Figures 2A, 2B, 2C, 2D show the format commonly used for the microinstructions in microprogrammed control units, including therein that one object of the invention;

— Figure 3 shows more in details some elements of the control unit object of the invention;

— Figure 4 shows in flow diagram the development of an operative sequence in a microprogrammed control unit known in the prior art;

— Figure 5 shows in flow diagram the development of the same operative sequence of Fig. 4 in a microprogrammed control unit according to the invention;

— Figure 6 shows a possible modification of the circuital arrangement of the microprogrammed control unit object of the invention.

Figures 1A and 1B jointly show, in block diagram, a preferred embodiment of the microprogrammed control unit with multiple branch capability object of the invention.

Such unit comprises a conventional and known portion (that one of Fig. 1A) and an additional portion (that one of Fig. 1B) where the invention more properly resides.

For description completeness and for a better understanding of the invention, Figure 1A is now considered.

A conventional control unit comprises a register 1 (or ROSAR) for control memory addressing, whose outputs are connected through a channel 2 to the addressing inputs of a control memory 3.

Preferably such control memory is constituted by two portions: a read only portion 3A and a read/write portion 3B.

In such a way some microprograms of general and frequent use may be permanently stored into portion 3A, whilst some microprograms of unfrequent use (for instance diagnostic purpose) or for the execution of particular operation may be stored into portion 3B whenever required.

The control memory parallelism is for instance 32 bits and the size is for instance 32 K words, of which 4 K are only readable and 28 K readable/writeable.

The outputs of control memory 3 are connected to the inputs of an output register 5 (ROR).

The outputs of register 5 are connected to the inputs of a decoding network 6 which decodes the microinstruction in a set of microcommands $M_1$, $M_2$, $M_N$.

A timing unit 4 of known type, for instance of the type described in U.S. Patents N. 4,134,073, N. 3,599,011, N. 3,418,498, generates on a suitable number of outputs some cyclical timing pulses $T_1$, $T_2$, $T_N$. The timing pulses are suitably ANDed with the microcommands, so as to obtain some suitably timed microcommands during each machine cycle. Fig. 1A shows for instance that $T_1$ and $M_1$ generate through AND gate 7 the timed microcommand $MC_1$ and $T_2$, $M_2$ generate through AND gate 14 the timed microcommand $MC_2$.

The timed microcommands control the several elementary operations developping during a machine cycle in both the control unit and the processing unit controlled by the control unit, such as the loading of registers, the starting of memory cycles, the gate enabling, and so on.

Register ROSAR 1 receives to its inputs the address used to address memory 3 from the output set of a multiplexer 16.

The address is formed in known way by incrementing by one unit the previous address, by summing to the previous address a jump displacement K defined by the microinstruction in progress or by replacing the previous address with a new absolute address.

In Fig. 1A the output channel 2 of register ROSAR 1 is connected to the inputs of a buffer register T ADD 8.

The outputs of register T ADD 8 are connected to the inputs of an incrementing network 9 and to a first set of inputs of a summing network ADD 10.

Summing network 10 receives on a second set of inputs, through a channel 11 and a multiplexer 12, the bits of a field of the microinstruction contained in register ROR 5.

The outputs of incrementing network 9 are connected, through a channel 13, to a first input set of a multiplexer 16. Through such path ROSAR 1 receives to its inputs the previous address incremented by one.

The outputs of summing network 10 are connected through a channel 15 to a second input set of multiplexer 16.

Through such path ROSAR 1 receives to its inputs the previous address incremented by a displacement K.

Even the outputs of multiplexer 12 are connected through a channel 17 to a third input set of multiplexer 16.

. Through such path ROSAR 1 receives to its inputs an absolute address. Another addressing path is constituted by a channel 19 connected to a fourth input set of multiplexer 16.

Channel 19 may receive, for instance, addressing codes from registers, not shown, of the data processing equipment.

Obviously the several input sets of multiplexers 16 and 12 are enabled in mutually exclusive way by suitably timed microcommands or by suitable control signals.

For instance, Fig. 1A shows that multiplexer 16 is controlled by four selection signals $S_1, S_2, S_3, S_4$ (for description simplicity purposes, 4 signals are evidenced, even if the control may be practically performed in coded form by only two signals) and multiplexer 12 by signal $S_5$.

Signal $S_1$ enables, for example, the transfer from channel 13 to ROSAR 1, $S_2$ the transfer from channel 15 to ROSAR 1, $S_3$ (through an OR gate 18) the transfer from channel 17 to ROSAR 1 and $S_4$ the transfer from channel 19 to ROSAR 1.

Signal $S_5$, when present, enables for example (through an OR gate 112) the transfer of information from an input channel 46 to the output of multiplexer 12.

Absent signal $S_5$, the transfer is enabled from the output channel 118 of ROR 5 to the output of multiplexer 12.

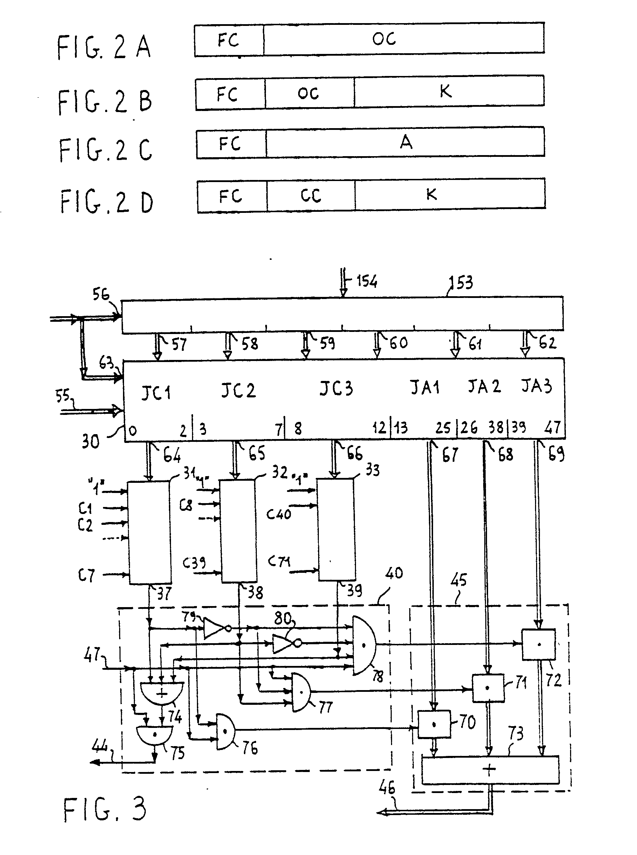

Figures 2A, 2B, 2C, 2D show the format of the most common types of microinstructions used in the data processing systems.

Figure 2A shows the format of an operative microinstruction. It comprises a function code FC and an operative code OC.

Fig. 2B shows the format of an unconditioned relative jump microinstruction. It comprises a function code FC, a possible operative code OC and a jump displacement K.

Fig. 2C shows the format of an unconditioned absolute jump microinstruction. It comprises a function code FC and a jump address A.

Fig. 2D shows the format of a conditioned relative jump microinstruction. It comprises a function code FC, a condition code CC and a jump displacement K.

An operative microinstruction always requires the sequential addressing of the next microinstruction and, when it is contained into ROR 5, generates through decoding network 6 a microcommand MS1 which, suitably timed, generates in its turn $S_i$.

In this way the address of the microinstruction contained in ROR 5, such address being contained in T ADD 8, is incremented by 1 and transferred through multiplexer 16 to ROSAR 1, where it therefore addresses the next microinstruction.

An unconditioned (absolute or relative) jump microinstruction contained in ROR 5 generates through decoding network 6 one of two microcommands MS3, MS2 which, suitably timed, generate in their turn $S_3$ or $S_2$. So the address which is loaded into ROSAR 1 is a new address equal to A (address transferred from ROR 5 through multiplexer 12 and channel 17) or address equal to the previous one (contained in T ADD 8) incremented by K (K being the jump displacement transferred from ROR 5 through multiplexer 12 and channel 11).

A conditioned jump microinstruction provides two alternatives for the development of the next address.

The condition code CC contained in such microinstruction specifies that a particular condition must be examined in order to decide which address has to be the next one.

The condition code CC (Fig. 1A) substantially operates as selection code for a multiplexer 20, which receives on its several inputs a plurality of signals representative of conditions or statuses which occur within the data processing system.

In data processing systems hundreds of conditions are often to be considered: by way of example carry signals owing to arithmetical operations, overflow signals, signals of particular operative modes (initializing, privileged), signals indicating particular characteristics of the operands (decimal, packed, binary), etc. may be considered.

The condition code CC selects, through multiplexer 20, one and only one of these conditions and, if it is verified (that is at logical level 1) multiplexer 20 emits on its outputs a verified condition signal CV. Through decoder 6, the conditioned jump microinstruction generates a microcommand CE to enable the condition examination.

CE and CV are applied to the inputs of an AND gate 50, CE and $\overline{CV}$ (obtained from CV through a NOT 150) are applied to the inputs of an AND gate 51.

If the condition CV is verified, a signal $S_2$ appears on the output of AND gate 50.

If the condition CV is not verified, a signal $S_1$ appears on the output of AND gate 51.

$S_1$ and $S_2$ are used as selection commands of multiplexer 16.

The control unit portion of Fig. 1B is now considered, where the inventive aspects are located.

Besides the elements already shown in Fig. 1A and known in the prior art, the control unit comprises a first auxiliary read/write memory 21, a second auxiliary read/write memory 30, a plurality of selection and condition examination networks 31, 32, 33, a priority network 40 coupled to the selection and condition examination networks and a jump address selection network 45.

Auxiliary memory 21 has preferably a reduced parallelism (for instance of 8 bits) as to that one of control memory 3 and a reduced capacity (for instance of 4K bytes).

The addressing inputs 52 of memory 21 are connected to the outputs of an OR gate set 22 having two input sets 53, 54.

OR gate set 22 receives on input set 54, through an AND gate set 23, the less significant portion of the memory address present on channel 2; such portion must be sufficient to address every position of auxiliary memory 21 (in the preferred embodiment shown this address portion comprises 12 bits).

OR gate group 22 receives further on its input set 53, through an AND gate group 24, an address latched into a register 25.

Register 25 may be loaded with addresses coming from suitable machine channels, not shown.

The control inputs of AND gate groups 23, 24 are respectively connected to the inverted output and to the direct output of a flip-flop 26. Such flip-flop is set/reset by suitable microcommands MC4, MC5.

When flip-flop 26 is set, it indicates that the control unit is in initializing phase: during such phase AND gate group 24 is enabled, whilst AND gate group 23 is locked.

Auxiliary memory 21 is therefore addressed by the addresses contained in register 25 and, in correspondence of each addressed word (byte) binary codes may be stored.

Such binary codes are received through an input channel 27 connected, in its turn, to suitable machine channels, not shown.

Memory 21 may be therefore initialized.

In this condition, memory 21 receives write timed commands WR through an AND gate 28 enabled by the direct output of flip-flop 26.

When flip-flop 26 is reset, the control unit is in operative phase. In such case, the same address, used to address control memory 3, addresses, through AND gate set 23 (enabled during such phase), auxiliary memory 21 for read operations.

Since memory 21 has a capacity lower than that one of control memory 3, only the less significant portion of the address will be used (in the preferred embodiment shown this portion comprises 12 bits).

The outputs of auxiliary memory 21 are connected to the inputs of a register 128 (STATUS REG.) whose outputs, in turn, are connected to the addressing inputs of the second auxiliary read/write memory 30.

Such memory suitably has a reduced number of addressable positions; this number is equal to or lower than the addressing capacity determined by the parallelism of memory 21.

In the embodiment shown, because the parallelism of memory 21 is 8, memory 30 may have 256 addressable positions, each one having a high parallelism, for instance of 48 bits.

The outputs of register 128 are further connected to the inputs of an AND gate set 29, whose outputs are connected to the inputs of a decoder 34.

Decoder 34 decodes the word contained in register 128 and read out from memory 21 and provides on its outputs a set of additional microcommands which add to the set of microcommands produced by decoder 6. Therefore auxiliary memory 21 has, among its functions, the one to generate, through decoder 34, some additional microcommands.

A control network enables AND gate group 29 only for certain conditions and secures that the additional microcommands be generated in particular circumstances only.

Such network comprises two input AND gates 132, 133, a two input OR gate 134, a flip-flop 35 and a decoder 36.

Decoder 36 has its inputs connected to channel 2 and an output which rises to logical level 1 when the address on channel 2 is less than 4K. The output of decoder 36 is connected to an input of AND gate 133. The second input of AND gate 133 is connected to the inverted output of flip-flop 26.

The output of AND gate 133 is connected to an input of OR gate 134, whose output is connected to the enabling input of AND gate set 29. Thus auxiliary memory 21 generates additional microcommands only when the microinstruction addresses are less than 4K.

For addresses greater than 4K, such function of memory 21 is inhibited to avoid the association of the same complementary microcommands to several different microinstructions having addresses which differ among them by multiples of 4K.

Such restriction may be removed by presetting flip-flop 35 by means of a suitable microcommand MC6.

The direct output of flip-flop 35 is connected to an input of a two inputs AND gate 132, whose second input is connected to the inverted output of flip-flop 26.

The output of AND gate 132 is connected to an input of OR gate 134. Flip-flop 35 is reset by a microcommand MC7.

When flip-flop 35 is set, AND gate set 29 is enabled even for microprogram addresses greater than 4K, provided the system is not in initializing phase (flip-flop 26 is reset).

In such case the function of microcommand integration by means of additional microcommands is performed by auxiliary memory 21, even for microprogram addresses greater than 4K.

This is useful for diagnostic purposes and, more generally, in case an operation of the control unit is established which uses limited and well defined areas of the control memory, that is pages, each one having a size of 4K words.

In this case auxiliary memory 21 may be successively loaded with complementary information relative to such pages.

However according to the invention, the main function of memory 21 is that one of addressing auxiliary memory 30.

Auxiliary read/write memory 30 is devoted to store, in every addressable memory position, a plurality of information and precisely:

a) a plurality of binary codes of jump conditions JC1, JC2, JC3. Each one of such codes identifies one among several conditions which must be examined.

b) a plurality of binary codes representative of absolute jump addresses JA1, JA2, JA3.

Auxiliary memory 30 has a plurality of output sets 64, 65, 66, 67, 68, 69. Output sets 64, 65, 66 are connected to the inputs of as many condition examination and selection networks 31, 32, 33.

Each one of these networks receives further on an input set (135, 136, 137, respectively) some signals representative of conditions which occurs within the data processing system comprising the described control unit.

As already mentioned, the conditions may be of the most various type. Such conditions are provided in groups on input sets 135, 136, 137. Each selection network allows, based on the jump condition code, to select that particular input of the input set (135, 136, 137 respectively) used to transfer to the same network a particular condition; if such condition is present or verified, the selection network emits on an output (37, 38, 39 respectively) a signal of verified condition at logical level 1.

Outputs 37, 38, 39 are connected to the inputs of a priority selection network 40.

Network 40 selects, among the several verified condition signals present at the same time on its inputs, that one which is more prioritary and transfers it to one of several selection outputs 41, 42, 43. It provides further on an output 44 a forced jump signal EINTFO, whenever a condition is verified and whenever the condition codes JC1, JC2, JCN coming from memory 30 impose a forced jump irrespective of any condition being verified or not.

Selection outputs 41, 42, 43 are connected to the control inputs of a selector 45, which receives to its input sets the jump addresses JA1, JA2, JA3 through the outputs 67, 68, 69 of memory 30.

One of such jump addresses is selected and applied through lead group 46 to an input set of multiplexer 12.

Signal EINTFO controls multiplexer 12 through OR gate 112 and multiplexer 16 through OR gate 18.

Priority selection network 40 is enabled by a signal present on lead 47 and coming from the output of OR gate 134.

In other words the mechanism of multiple examination of several jump conditions intervenes only when the system is not in initializing phase and for addresses of control memory 3 less than 4K.

But it may intervene for addresses greater than 4K if flip-flop 35 has been set.

Fig. 3 shows in greater details auxiliary memory 30, condition selection networks 31, 32, 33, priority selection network 40 and selector 45.

Auxiliary read/write memory 30 suitably has an high parallelism (48 bits) and a reduced capacity (for instance 256 words) and it is formed by six independent modules arranged in parallel.

Memory 30 is loaded through a demultiplexer 153 from a channel 154 of the data processing system.

The function of demultiplexer 153 is to adjust the parallelism of memory 30 to the one of channel 154.

For instance channel 154 may have a parallelism of 8 bits.

Suitable microcommands, applied to control inputs 56 of demultiplexer 153, allow to transfer the information present on channel 154 to one of output sets 57, 58, 59, 60, 61, 62 connected to as many data input sets of memory 30.

The same microcommands applied to control inputs 56 are applied to some control inputs 63 of memory 30 and allow to select one of the six modules constituting memory 30.

The addressing of the memory position is obtained through inputs 55 connected to the outputs of status register 128.

The reading of memory 30 may be performed, in parallel for all the modules, so as to read for every addressed position, an information of 48 bits.

In the described embodiment, the read information has the following format:

bits 0—2 : first code JC1 identifying one out of 8 jump conditions,

bits 3—7 : second code JC2 identifying one of 32 jump conditions,

bits 8—12 : third code JC3 identifying one of 32 jump conditions,

bits 13—25 : jump address JA1 coupled to first code JC1,

bits 26—38 : jump address JA2 coupled to second code JC2,

bits 39—47 : jump address JA3 coupled to third code JC3.

The bits 0—2 are applied, through output set 64, to the control inputs of condition selection network 31 substantially formed by a multiplexer having 8 inputs and an output.

A logical "1" is permanently applied to an input of network 31, whilst 7 different conditions $C_1, \ldots, C_7$ are applied to the other inputs of it.

The bits 3—7 are applied, through output set 65, to the control inputs of condition selection network 32 substantially formed by a multiplexer having 32 inputs and an output.

A logical "1" is permanently applied to an input of network 32, whilst 31 different conditions $C_8, \ldots, C_{39}$ are applied to the other inputs.

The bits 8—12 are applied, through output set 66, to the control inputs of condition selection network 33, substantially formed by a multiplexer having 32 inputs and an output.

A logical "1" is permanently applied to an input of network 33, whilst 31 different conditions $C_{40}, \ldots, C_{71}$ are applied to the other inputs.

The bits 13—25 are applied, through output set 67, to the inputs of an AND gate set 70.

The bits 26—38 are applied, through output set 68, to the inputs of an AND gate set 71.

The bits 39—47 are applied, through output set 69, to the inputs of an AND gate set 72.

The output sets of AND gate sets 70, 71, 72 are connected to as many input sets of an OR gate set 73, whose outputs are connected, through channel 46, to an input set of multiplexer 12.

Gate groups 70, 71, 72, 73 form selector 45 of Fig. 1B.

Priority selection network 40 is formed by an OR gate 74, by AND gates 75, 76, 77, 78 and by two NOT gates 79, 80.

OR gate 74 has its inputs connected to outputs 37, 38, 39 of multiplexers 31, 32, 33 respectively and the output connected to an input of AND gate 75.

A second input of AND gate 75 is connected to lead 47.

The output of AND gate 75 is connected to lead 44.

Output 37 of multiplexer 31 is connected to an input of AND gate 76 which has a second input connected to lead 47.

The output of AND gate 76 is connected to the enabling input of AND gate set 70.

It is therefore clear that, when one of the conditions selected by multiplexer 31 is verified, that is output 37 of multiplexer 31 is at logical level 1, and network 40 is enabled by a logical level 1 present on lead 47, signal EINTFO at logical level 1 is generated on lead 44 and jump address JA1 is transferred to channel 46.

Output 38 of multiplexer 32 is connected to an input of AND gate 77 which has a second input connected to lead 47 and a third input connected to output 37 of multiplexer 31 through NOT gate 79.

The output of AND gate 77 is connected to the enabling input of AND gate set 71.

It is therefore clear that, when one of the conditions selected by multiplexer 32 is verified, but none of the conditions selected by multiplexer 31 is verified and, besides, network 40 is enabled by a logical level 1 present on lead 47, signal EINTFO at logical level 1 is generated on lead 44 and jump address JA2 is transferred to channel 46.

Output 39 of multiplexer 33 is connected to an input of AND gate 78 which has a second input connected to lead 47, a third input connected to output 37 of multiplexer 31 through NOT gate 79 and a fourth input connected to output 38 of multiplexer 32 through NOT gate 80.

It is therefore clear that, when one of the conditions selected by multiplexer 33 is verified, but, at the same time, none of the conditions selected by multiplexers 31, 32 is verified and, besides, network 40 is enabled by a logical level 1 present on lead 47, signal EINTFO at logical level 1 is generated on lead 44 and jump address JA3 is transferred to channel 46.

Having described a preferred embodiment of the invention it is convenient to point out its advantages by means of some examples.

A first example relates to the firmware routine which develops absolute memory addresses starting from relative addresses.

It is known that in the modern data processing systems, in order to free the program writing and the address settlement from the real memory positions, relative or conventional addresses are used; the data processing systems suitably process such addresses to obtain from a relative address an absolute memory address.

The computation may be performed in different ways according to the particular operative statuses of the system.

Besides, together with the computation, it is necessary to perform several controls to secure that, during write operations, a memory zone exclusively devoted to read operations is not addressed and so on.

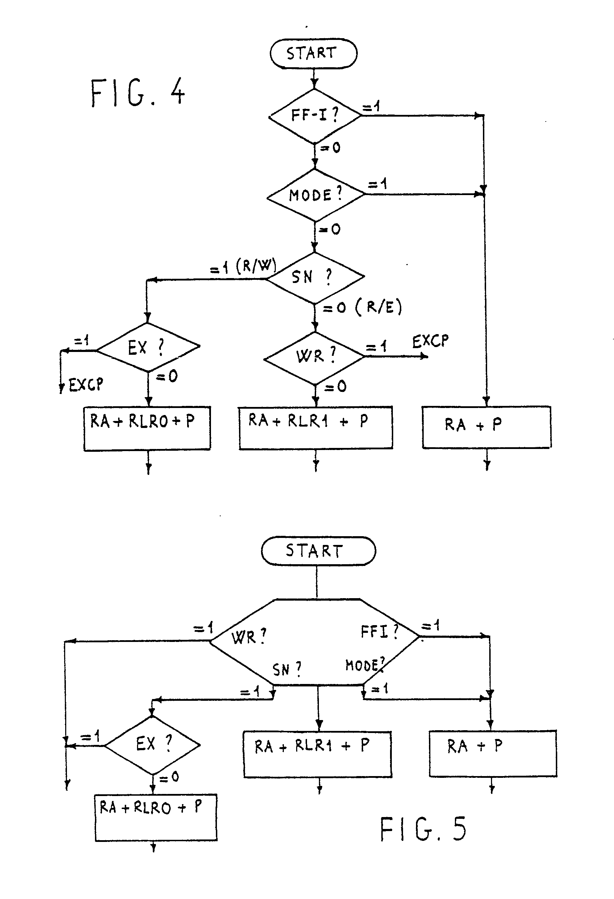

Fig. 4 shows, in flow diagram, the absolute address computation performed in conventional way.

Starting from an initial condition (START) where, for instance, a program instruction specifying an operand located in a relative address RA has been read out, it has to be verified by means of a first conditioned jump microinstruction whether the system is in initializing status or not, that is whether a flip-flop FF−I is set (FF−I=1) or reset (FF−I=0).

If the system is in initializing status, the absolute address is given by the sum RA+P, where P is the content of a register which defines a protected memory zone.

If the system is not in initializing status, it is to be verified whether the system is in privileged operative status or in normal status (user) that is whether a flip-flop MODE is set (MODE=1) or reset (MODE=0).

If the system is in privileged status, the operation RA+P is executed. In the opposite case an additional control is performed, that is it is verified whether the instruction refers to a memory zone SN devoted to store information which can be read and written (SN=1(R/W)) or only read out (SN=0(R/E)).

If SN=1, it is to be verified whether the instruction defines, by means of its operative code, a read/write operation or it is of executive type (EX=1).

If the instruction is executive, an exception is pointed out and an exception treatment routine EXCP is performed, otherwise the absolute address computation is performed by summing to the relative address the information contained in a register RLRO, as well as the information contained into a register P.

If SN=0, that is the instruction refers to a memory zone devoted to store information which can be readout only, it is verified whether the instruction is a write instruction (WR=1).

If the instruction is a write instruction, an exception is pointed out and an exception treatment routine is performed.

In the contrary case, the absolute address is calculated.

It is clear that the development by microinstructions of the above described microprogram requires the execution of a separate microinstruction for each condition examination.

So the examination of conditions FF−I, MODE, SN, WR requires four conditioned jump microinstructions to be performed during four machine cycles.

In addition the four microinstructions require four memory positions to be stored.

The already described microprogrammed control unit object of the invention has, on the contrary, the advantage to allow the simultaneous examination of several conditions.

Fig. 5 shows in flow diagram the calculus of an absolute address by using the described control unit.

Starting from the same previous initial condition, the conditions FF−I, MODE, SN, WR are examined by means of a single jump microinstruction by using the information associated to the jump microinstruction and stored in a position of auxiliary memory 30.

The only constraint to be considered during such simultaneous examination is the prioritary order according to which the several conditions must be verified, such order having to correspond to the logical order according to which the examination of the conditions must occur.

So the condition FF−I which logically precedes the others must belong to condition set $C_1, \ldots, C_7$ (Fig. 3), the condition MODE must belong to condition set $C_8, \ldots, C_{39}$ the condition SN must belong to condition set $C_{40}, \ldots, C_{71}$ and the condition WR must belong to the set of conditions directly examined by the microinstruction decoded by decoder 6.

It is clear that the microprogram development requires in this case a lower number of machine cycles and that the use of two auxiliary memories 21, 30 is widely compensated by the lesser memory size occupation of control memory 3.

A further advantage of the microprogrammed control unit object of the invention is to allow the correction of microprogramming errors and to remedy for possible faults of the control memory.

It has been already mentioned that control memory 3 is formed by a read only zone and by a read/write zone.

Whilst the read/write memories are dynamic, that is the information stored therein is lost if the power supplying fails, the read only memories are static, that is the information stored therein is permanent.

The use of static and permanent control memories is necessary to allow the start or initialization of the system.

Besides, such memories are more unexpensive and faster than the others.

But such memories have the inconvenience to be inalterable and so, if they have been programmed in a wrong way, they cannot be modified and the replacement of the components constituting the memory is required.

The same inconvenience happens if, during the use, a fault occurs in particular positions of the control memory and causes the reading of wrong microinstructions.

In this case, by using the described control unit, it is possible to by-pass the wrong microinstructions (owing to a fault or a microprogramming mistake).

It is clear that a wrong microinstruction is reached in sequential way or by means of a jump starting from one or several previous microinstructions.

It is therefore sufficient to associate to such previous microinstructions, each one of which will have a certain memory address ADDRi, in the positions of auxiliary read/write memory 21 having equal address, an address code which points to a predetermined position of auxiliary memory 30.

In such predetermined position, a code of condition to be examined will be written which points to an always verified condition, that is to the condition "1" permanently applied to an input of multiplexer 31.

A jump address JA1 is associated to such code, such jump address allowing to jump to a memory position, within memory 3 and particularly within read/write zone 3B of such memory.

In such memory position a correct microinstruction, substitutive of the wrong microinstruction, will be found.

Such right microinstruction will be followed, in its turn, by a jump microinstruction which will refer to the microinstruction logically subsequent the wrong one, which is therefore by-passed.

It is clear that the previous description only relates to a preferred embodiment of the invention and that a lot of modifications may be made without departing from the scope of the invention.

For instance, auxiliary memory 30 may contain a number of jump condition groups greater or lesser than 3 and correspondingly a number of jump address groups greater or less than 3.

The jump condition selection networks, the priority selection network 40 and the address selector 45 will be suitably modified in order to consider this fact.

Besides, the number of jump condition groups and the number of jump address groups stored in memory 30 have not necessarily to coincide.

For instance, the number of jump condition groups stored into auxiliary memory 30 may be greater than the number of jump address groups and one or several jump condition groups may recall, when a condition is verified, some jump addresses contained into other machine registers. Besides it is possible to use auxiliary memory 21 and auxiliary memory 30 separately.

In fact it has been explained that the binary codes stored into memory 21 may be used both as addresses for memory 30 and codes for the generation of additional microcommands obtained through decoder 34.

The double function carried out by such codes imposes a reciprocal interdependence among additional microcommands and addresses of memory 30.

This restriction may be overcome, as shown in Fig. 6, by means of some additional logical elements which completely free the two functions carried out by the codes stored into memory 30.

Fig. 6 shows some elements already shown in Fig. 1B, that is register 128, AND gate group 29 and OR gate 134.

In Fig. 6 the output of OR gate 134 does not enable directly AND gate group 29 and, through lead 47, network 40, but only indirectly through a two input AND gate 90 and a two input AND gate 91.

Two inputs AND gate 90 receives to a first input the signal coming from the output of OR gate 134 and to the second input a signal coming from an output of register 128, such last signal corresponding for instance to the most significant bit contained into register 128.

The output of AND gate 90 is connected to the enabling input of AND gate set 29.

AND gate 91 receives to an input the signal coming from the output of OR gate 134 and to the other input, through a NOT gate 92, the signal coming from an output of register 128, that is the signal corresponding to the next significant bit, in inverted form.

It is clear that is such case the generation of the additional microcommands through decoder 34 and the enabling of the multiple jump network occur in mutually exclusive way.

A further noteworthy consideration relates to the criteria for relative priority group assignment of the several jump conditions.

It has been already noted that the several jump conditions are organized according to decreasing priority groups and that a jump condition belonging to a more prioritary group prevails, when it is examined and verified, over a jump condition belonging to a less prioritary group which is examined and verified too.

In some cases it may be necessary to examine only a condition belonging to a less prioritary group.

This may be obtained by imposing that, within the most prioritary condition groups, auxiliary memory 30 selects for the examination a condition which would not be certainly verified.

This involves in the microprogram design a careful and strict examination of the several machine statuses.

In order to avoid this burden, it is sufficient to insert in the most prioritary condition groups, a condition which is never verified and corresponds to a "0" permanently applied to one of the inputs of multiplexers 31, 32 of Fig. 1B and Fig. 3 in the same way that, as already pointed out, a "1" may be permanently applied to one of the inputs in order to obtain the capability of an unconditioned jump.

**Claims**

1. Microprogrammed control unit with multiple branch capability comprising a main control memory (3), an addressing register (1) connected to the addressing inputs of said main memory, a main memory output register (5) connected to the outputs of said main memory, a microcommand decoder (6) connected to the outputs of said main output register, an addressing network (12, 8, 9, 10, 16) for generating sequential addresses and absolute or relative, conditioned or unconditioned jump addresses, said addressing network being controlled by microcommands received from outputs of said decoder,

— a first auxiliary read/write memory (21) addressed by a portion of the content of said addressing register,
— an auxiliary output register (128) connected to the outputs of said first auxiliary memory;
— a second auxiliary read/write memory (30) with a greater word width than the first auxiliary read/write memory addressed by the content of said auxiliary output register,
— a plurality of condition selection networks (31, 32, 33) each one provided with first inputs (135, 136, 137) to receive a plurality of conditions to be examined, with second selection inputs connected to some outputs (64, 65, 66) of said second auxiliary memory, and with an output (37, 38, 39)
— a priority selection network (40) having a plurality of inputs, each one connected to the output of one of said condition selection networks and a plurality of outputs (41, 42, 43),
— a jump address selection network (45) having control inputs, each one connected to an output of said plurality of outputs of said priority selection network, a plurality of input sets connected to a plurality of output sets (67, 68, 69) of said second auxiliary memory and an output set (46) connected to said addressing network.

2. Microprogrammed control unit according to claim 1 where said first auxiliary memory (21) has a smaller word width than said main memory (3) and further comprises control logical circuits (35, 36, 132, 133, 134), controlled by microcommands, to lock the outputs of said priority selection network (40) when the addresses contained into said addressing register (1) are greater than the number of memory positions of said first auxiliary memory (21).

3. Microprogrammed control unit according to claim 2 further comprising a second decoding network (34) for additional microcommand generation, provided with inputs connected to the outputs of said auxiliary output register (128).

4. Microprogrammed control unit according to claim 3 further comprising a group of control gates (29) interposed among the inputs of said second decoding network (34) and the outputs of said auxiliary output register (128) and controlled by said control logical circuits (35, 36, 132, 133, 134) in order to lock the outputs of said auxiliary register (21) when the addresses contained in said addressing register (1) are greater than the number of memory positions of said first auxiliary memory (21).

**Patentansprüche**

1. Mikroprogrammierte Steuereinheit mit Vielfachverzweigungsfähigkeit und einem Hauptsteuerspeicher (3); einem an dessen Adressiereingänge angeschlossenen Adressierregister (1); einem an die Ausgänge des Hauptspeichers angeschlossenen Hauptspeicher-Ausgangsregister (5); einem an dessen Ausgänge angeschlossenen Mikrobefehlsdecoder (6); einem Adressiernetzwerk (12, 8, 9, 10, 16) zur Erzeugung von Folgeadressen und absoluten oder relativen, konditionierten oder unkonditionierten Sprungadressen, wobei dieses Adressiernetzwerk durch von den Ausgängen des Decoders stammende Mikrobefehle gesteuert wird;

— einem ersten Hilfs-Schreib/Lesespeicher (21), welcher durch einen Teil des Inhalts des Adressierregisters adressiert wird;
— einem an die Ausgänge des ersten Hilfsspeichers angeschlossenen Hilfs-Ausgangsregisters (128);
— einem durch den Inhalt des Hilfs-Ausgangsregisters adressierten zweiten Hilfs-Schreib/Lesespeichers (30) mit einer größeren Wortbreite als der erste Hilfs-Schreib/Lesespeicher;
— mehreren Zustandsauswahlnetzwerken (31, 32, 33) jeweils mit ersten Eingängen (135, 136, 137) zum Empfang mehrerer zu überprüfender Zustände, mit an einige Ausgänge (64, 65, 66) des zweiten Hilfsspeichers angeschlossenen zweiten Auswahleingängen sowie einem Ausgang (37, 38, 39);
— einem Prioritäts-Auswahlnetzwerk (40) mit mehreren jeweils an den Ausgang eines der Zustandsauswahlnetzwerke angeschlossenen Eingängen sowie mehreren Ausgängen (41, 42, 43);
— einem Sprungadreßauswahlnetzwerk (45) mit Steuereingängen, von denen jeder an einen der Ausgänge des Prioritätsauswahlnetzwerks angeschlossen ist, ferner mit mehreren Gruppen von Eingängen, die an eine Mehrzahl von Ausgangsgruppen (67, 68, 69) des zweiten Hilfsspeichers angeschlossen sind, sowie schließlich mit einer an das Adressiernetzwerk angeschlossenen Ausgangsgruppe (46). ·

2. Mikroprogrammierte Steuereinheit nach Anspruch 1, deren erster Hilfsspeicher (21) eine kleinere Wortbreite hat als der Hauptspeicher (3) und welche ferner durch Mikrobefehle gesteuerte Steuerlogikschaltungen (35, 36, 132, 133, 134) aufweist, um die Ausgänge des Prioritätsauswahlnetzwerks (40) zu verriegeln, sofern die im Adressierregister (1) enthaltenen Adressen größer sind als die Anzahl von Speicherstellen des ersten Hilfsspeichers (21).

3. Mikroprogrammierte Steuereinheit nach Anspruch 2 mit einem zweiten Decodiernetzwerk (34) zur Erzeugung zusätzlicher Mikrobefehle, welches an die Ausgänge des Hilfsausgangsregisters (128) angeschlossene Eingänge aufweist.

4. Mikroprogrammierte Steuereinheit nach Anspruch 3 mit einer Gruppe von zwischen die Eingänge des zweiten Decodiernetzwerks (34) und die Ausgänge des Hilfsausgangsregisters (128) eingeschalteten Steuergattern (29), welche durch die Steuerlogikschaltungen (35, 36, 132, 133, 134) gesteuert werden, um die Ausgänge des Hilfsregisters (21) zu verriegeln, sofern die im Adressierregister (1) enthaltenen Adressen größer sind als die Anzahl der Speicherstellen des ersten Hilfsspeichers (21).

**Revendications**

1. Unité de commande microprogrammée ayant une capacité de branchement multiple, comprenant une mémoire de commande principale (3), un registre d'adressage (1) connecté aux entrées d'adressage de la mémoire principale, un registre de sortie de mémoire principale (5) connecté aux sorties de la mémoire principale, un décodeur de microcommandes (6) connecté aux sorties du registre de sortie de mémoire principale, un réseau d'adressage (12, 8, 9, 10, 16) pour engendrer des adresses séquentielles et des adresses absolues ou relatives de branchement conditionné ou non conditionné, le réseau d'adressage étant commandé par des microcommandes reçues des sorties du décodeur,

— une première mémoire de lecture/écriture ou vive auxiliaire (21) adressée par une partie du contenu du registre d'adressage,
— un registre de sortie auxiliaire (128) connecté aux sorties de la première mémoire auxiliaire,
— une seconde mémoire de lecture/écriture ou vive auxiliaire (30) ayant une largeur de mot supérieure à celle de la première mémoire vive auxiliaire, adressée par le contenu du registre de sortie auxiliaire,
— un ensemble de réseaux de sélection de condition (31, 32, 33) pourvus chacun de premières entrées (135, 136, 137) pour recevoir un ensemble de conditions à examiner, de secondes entrées de sélection connectées à certaines sorties (64, 65, 66) de la seconde mémoire auxiliaire, et d'une sortie (37, 38, 39),

— un réseau de sélection de priorité (40) comportant un ensemble d'entrées, connectées chacune à la sortie de l'un des réseaux de sélection de condition et un ensemble de sorties (41, 42, 43),

— un réseau de sélection d'adresse de branchement (45) comportant des entrées de commande, connectées chacune à une sortie de l'ensemble de sorties du réseau de sélection de priorité, un ensemble de groupes d'entrées connectés à un ensemble de groupes de sorties (67, 68, 69) de la seconde mémoire auxiliaire et à un groupe de sorties (46) connecté au réseau d'adressage.

2. Unité de commande microprogrammée selon la revendication 1, dans laquelle la première mémoire auxiliaire (21) a une largeur de mot inférieure à celle de la mémoire principale (3) et qui comprend en outre des circuits logiques de commande (35, 36, 132, 133, 134), commandés par des microcommandes, pour bloquer les sorties du réseau de sélection de priorité (40) quand les addresses contenues dans le registre d'adressage (1) sont supérieures au nombre de positions de mémoire de la première mémoire auxiliaire (21).

3. Unité de commande microprogrammée selon la revendication 2, comprenant en outre un second réseau de décodage (34) pour la génération de microcommandes supplémentaires pourvu d'entrées connectées aux sorties du registre de sortie auxiliaire (128).

4. Unité de commande microprogrammée selon la revendication 3, comprenant en outre un groupe de portes de commandes (29) interposées parmi les entrées du second réseau de décodage (34) et les sorties du registre de sortie auxiliaire (128) et commandées par les circuits logiques de commande (35, 36, 132, 133, 134) afin de bloquer les sorties du registre auxiliaire (21) quand les adresses contenues dans le registre d'adressage (1) sont supérieures au nombre de positions de mémoire de la première mémoire auxiliaire (21).

FIG.1A

0 055 392

FIG. 6

FIG. 1B

2

FIG. 2 A

| FC | OC |
|----|----|

FIG. 2 B

| FC | OC | K |
|----|----|---|

FIG. 2 C

| FC | A |
|----|---|

FIG. 2 D

| FC | CC | K |
|----|----|---|

FIG. 3

FIG. 4

START

FF-I ? →=1

=0

MODE ? →=1

=0

=1 (R/W) ← SN ?

=0 ( R/E)

=1 ← EX ?    WR ? →=1 EXCP

EXCP    =0    =0

RA + RLR0 + P    RA + RLR1 + P    RA + P

START

=1 ← WR ?    FFI ? →=1

SN ?    MODE?

=1    =1

=1 ← EX ?    RA + RLR1 + P    RA + P

=0

RA + RLR0 + P

FIG. 5